# EUROPEAN PATENT APPLICATION

(11) **EP 3 656 941 A1**
(43) Date of publication of application: **27.05.2020**
(21) Application number: 18382855.7
(22) Date of filing: 26.11.2018
(51) Int. Cl.: E04B 1/80

(54) **VACUUM INSULATION PANEL SYSTEM**

(71) Applicant: Fundación Tecnalia Research & Innovation, 20009 San Sebastián, Guipúzcoa (ES)
(72) Inventor: Uriarte Arrien, Amaia, 20009 San Sebastián - Guipúzcoa (ES)
(74) Representative: Balder IP Law, S.L.

(57) **Abstract**

A vacuum insulation panel system comprises a plurality of vacuum insulation panels (1) (VIPs) attached to a wall (3) by anchoring elements (11). The vacuum insulation panels (1) are arranged in an array comprising a plurality of rows and columns of vacuum insulation panels (1). Typically, the vacuum insulation panels are arranged in a two-dimensional array comprising a plurality of rows and columns of VIPs placed side by side, adjacent to each other.The system includes a plurality of gaps, each gap separating one vacuum insulation panel from an adjacent vacuum insulation panel. A vapor permeable material (2) is arranged in the gaps.

## Description

### TECHNICAL FIELD

The present invention relates to the field of vacuum insulation panel (VIP) systems and methods of assembling such systems.

### STATE OF THE ART

Vacuum insulation panels (VIPs) feature low thermal conductivity and are therefore often used for the thermal insulation of buildings. Frequently, the panels are arranged in arrays, that is, in rows and columns, covering one or more walls or sides of a building. To obtain an adequate thermal insulation, it is important that the panels in the rows and columns be placed relatively close to the adjacent panels in the adjacent rows and columns, as the spacing between panels will reduce the overall thermal insulation performance, allowing heat to escape or to enter. Also, the anchoring of the panels should not prejudice the physical integrity of the panels.

Specific systems for anchoring vacuum insulation panels have been developed. Examples of such systems are disclosed in WO-2014/142765-A1 and EP-1213406-A2. Often, prior art VIP systems comprise VIPs and elements for anchoring them to a wall, whereby the elements often are elongate elements or profiles (such as elements featuring U-, T- or H-shaped cross sections, or cross sections featuring U-, T- or H-shaped portions) defining channels for supporting horizontal and/or vertical edges of the generally rectangular or square VIPs. Examples of such profiles are disclosed in WO-2014/142765-A1 and EP-1213406-A2. The profiles are often preferably of a material featuring a low thermal conductivity so as to minimize their impact on the overall insulation performance of the building. Examples of suitable materials include polyethylene (PE), high-density polyethylene (HDPE), polystyrene (PS) and polyvinyl chloride (PVC), and the design of the profiles is often chosen so as to minimize the spacing between the VIPs so as to minimize the thermal bridge effect produced by the presence of these profiles.

### DESCRIPTION OF THE INVENTION

It has been observed that whereas prior art VIP systems allow for very high performance in terms of thermal insulation and sometimes also in terms of ease of assembly, there may be some unexpected side effects. Whereas efficient thermal insulation is often one of the primary goals when choosing materials and layout of the walls of buildings (especially taking into account the need to minimize energy consumption and CO₂ emission), VIPs are not only impermeable to air but also to vapor. Sometimes, the walls on which the VIPs are arranged have been designed to allow for a certain water vapor permeance, sometimes even so-called smart water vapor permeance. It has been found that contrary to what has been the general belief in the art, the desired water vapor permeance behaviour of the overall wall system may be impaired by the VIP system, and that conventional anchoring means and spacings between VIPs may not allow for sufficient water vapor permeance.

A first aspect of the invention relates to a system comprising a plurality of vacuum insulation panels (VIPs) attached to a wall by anchoring elements, the vacuum insulation panels being arranged in an array comprising a plurality of rows and columns of vacuum insulation panels. Typically, the vacuum insulation panels are arranged in a two-dimensional array comprising a plurality of rows and columns of VIPs placed side by side, adjacent to each other. The system includes a plurality of gaps, each gap separating one vacuum insulation panel from an adjacent vacuum insulation panel, and a vapor permeable material is arranged in the gaps.

The wall can be any kind of wall, such as the wall of a building, such as an apartment or office building or similar. In many embodiments of the invention, the wall features a certain level of water vapor permeance, that is, humidity can pass through the wall, such as from an inner surface of the wall to an external surface of the wall, on which the VIPs are placed.

The anchoring elements can be any kind of anchoring elements, including profiles (such as for example extruded profiles) of metal or of a synthetic material such as, for example, PE, HDPE, PVC or PS. For example, the anchoring elements can be of the type known from WO-2014/142765-A1 or EP-1213406-A2. The anchoring elements can include channels or grooves arranged for receiving and retaining an edge of one or more VIPs. In some embodiments, at least some of the anchoring elements feature a substantially H-shaped cross section, defining an upper and lower channel receiving the corresponding edges of two VIPs.

The reference to the gap being filled by a vapor permeable material does not mean that the space represented by the gap must be completely filled by said vapor permeable material. However, typically, the vapor permeable material extends along and across the entirety of the gap in the vertical and in the horizontal directions, or at least along and across more than 60%, preferably more than 80%, more preferably more than 90% of the gap in those directions. It is also often preferable that the vapor permeable material extend along most of the gap (such as more than 50, 60, 70, 80, 90 or 100% of the gap) in the direction perpendicular to the wall, that is, perpendicular to the array formed by the VIPs. In many embodiments, the vapor permeable material extends beyond the external surfaces of the VIPs, that is, out of the gap in the direction from the wall. A substantial presence of the vapor permeable material along and across the gap, and in the space from the wall to the surface of the VIPs and even beyond said surface, can be helpful to ensure an adequate thermal insulation, while allowing for a certain amount of vapor permeance.

In some embodiments, the vapor permeable material is present continuously over a distance corresponding to more than the height of one VIP, such as over a distance corresponding to several rows of VIPs.

In some embodiments of the invention, at least some of the gaps in which the vapor permeable material is arranged extend vertically between adjacent vacuum insulation panels arranged side by side. In some embodiments of the invention, all of the gaps in which the vapor permeable material is arranged extend vertically between adjacent vacuum insulation panels arranged side by side. In some embodiments of the invention, the anchoring elements are arranged between horizontal rows of vacuum insulation panels, for example, extending horizontally between the rows of vacuum insulation panels or attaching the vacuum insulation panels to the wall at specific points in correspondence with horizontal edges of the vacuum insulation panels.

The gaps in which the vapor permeable material is arranged may extend vertically and/or horizontally, although it has been found that it can often be preferable to arrange the vapor permeable material in gaps extending vertically, and use the horizontal spacings or gaps between vacuum insulation panels for the anchoring elements that anchor the vacuum insulation panels to the wall.

In some embodiments of the invention, the vacuum insulation panels have horizontal edges having a length, and the anchoring elements have substantially the same length as the horizontal edges of the vacuum insulation panels, so that there is a gap between adjacent anchoring elements, the vapor permeable material being present in the gap between the anchoring elements. The anchoring elements preferably have substantially the same length as the horizontal edges of the vacuum insulation panels, thereby leaving a gap between adjacent anchoring elements, so that also this gap can be filled with the vapor permeable material. In this way, the vapor permeable material can in some embodiments extend without interruption over a distance corresponding to multiple rows of vacuum insulation panels, in the vertical direction. This can facilitate assembly of the system and reduce the risk of assembly difficulties due to tolerances in the dimensions or assembly of components such as the anchoring elements.

In some embodiments of the invention, the system further comprising a plurality of external panels positioned spaced from the vacuum insulation panels, and the vacuum insulation panels are positioned between the external panels and the wall, the external panels being attached to the wall by fastening elements that extend through at least some of the gaps in which the vapor permeable material is arranged. It has been found that it can often be preferred to arrange the external panels, such as ceramic panels or other panels forming the outer façade of a building, spaced from the vacuum insulation panels, the spacing allowing for the system to breathe so as to remove the vapor by convection, for example, allowing humidity to exit the system in correspondence with an upper end thereof. It has been found practical to use the gaps in which the vapor permeable material is arranged to house the fastening elements. The fastening elements can, for example, be L-shaped, T-shaped or H-shaped elements that are attached both to the wall and to the respective external panel or panels, for example, by screws or any other suitable attachment means.

In some embodiments of the invention, the vapor permeable material has a T-shaped cross section. That is, the vapor permeable material can be arranged in the form of an elongate element extending along the gap, and have a T-shaped cross section, with one part of the element housed in the gap between the two respective vacuum insulation panels, and one part housed outside the gap, abutting against the external surfaces of the respective vacuum insulation panels in correspondence with the edges thereof. It has been found that this allows for a minimization of the thermal bridge effect produced by the gap between VIPs, while at the same time allowing for vapor permeance.

In some embodiments of the invention, the vapor permeable material is attached to the wall by fasteners including a disc-shaped member that abuts against the vapor permeable material. This kind of fasteners, such as so-called rosette fasteners, are suitable for fixation of many vapor permeable materials, such as spongy and/or fibrous materials.

In some embodiments of the invention, the vapor permeable material comprises or consists of mineral fibers. The vapor permeable material typically substantially consists of mineral fibers, optionally with binders and/or other additives. Typically, more than 50% by weight, such as more than 60, 70, 80 or 90% by weight of the vapor permeable material is made up of mineral fibers. Mineral fiber materials have been found to be useful to allow for reasonable insulation while allowing for breathability, that is, while allowing vapor to pass through the layer formed by vacuum insulation panels, the anchoring elements, and the vapor permeable material. Also, mineral fiber based elements such as mineral wool elements feature a certain compressibility, thereby making them compatible with the tolerances in the spacing between vacuum insulated panels. That is, this kind of elements can easily be made to fit into and substantially fill the gaps or spacings between adjacent vacuum insulation panels, adapting themselves to the kind of differences in spacing that typically occur due to manufacture and assembly tolerances. In addition, in what regards fire resistance, mineral fiber materials often or generally perform better than many other vapor permeable materials used for isolation purposes, such as those made up of polymer fibers or foamed polymers such as polyisocyanurate (PIR).

In some embodiments of the invention, the vapor permeable material comprises or consists of glass wool or stone wool. Glass and stone wall have been found especially appropriate for filling the space between VIPs, due to features such as compressibility, thermal insulation capacity, and vapor permeance.

Another aspect of the invention relates to a method of assembling a façade system, comprising:
- anchoring a plurality of vacuum insulation panels to a wall, leaving at least some gaps between at least some adjacent vacuum insulation panels;
- placing a vapor permeable material in the gaps;
- attaching a plurality of external panels to the wall using fastening elements, so that the external panels are spaced from the vacuum insulation panels, thereby providing a space that allows for removal of vapor, that is, a space that allows the façade to breathe.

In some embodiments of the invention, the step of anchoring the plurality of vacuum insulation panels to a wall comprises attaching anchoring elements to the wall, so that the anchoring elements extend in a horizontal direction, and placing the vacuum insulation panels in said anchoring elements such that the anchoring elements retain the horizontal edges of the vacuum insulation panels.

In some embodiments of the invention, the gaps are vertical.

In some embodiments of the invention, the fastening elements extend from the wall through the gap.

In some embodiments of the invention, the vapor permeable material comprises mineral wool.

What has been explained above regarding the system also applies to the method, *mutatis mutandis.*

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 is a schematic front view of part of a system according to an embodiment of the invention.
Figure 2 is a schematic top view of a cross section of the system of figure 1.
Figure 3 is a schematic perspective view of the system prior to attaching the external panels.
Figure 4 is a schematic perspective view of the system after attaching the external panels.

### DESCRIPTION OF A WAY OF CARRYING OUT THE INVENTION

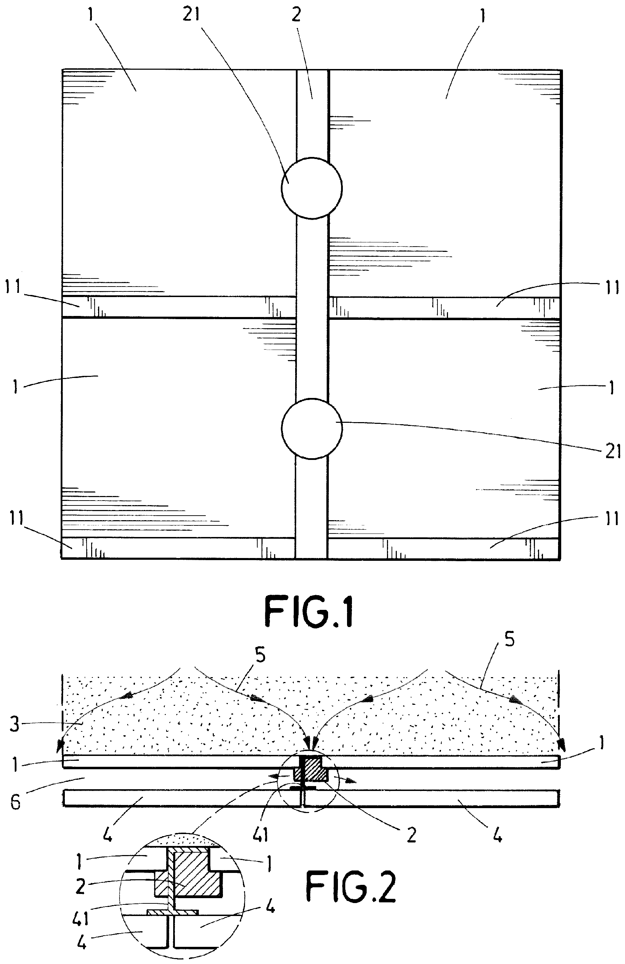

Figure 1 schematically illustrates the layout of a system in accordance with an embodiment of the invention, in which a plurality of vacuum insulation panels 1 are arranged in an array forming rows and columns of vacuum insulation panels 1, four of which are shown in figure 1. The VIPs 1 are attached to a wall by anchoring elements 11, such as by extruded profiles arranged horizontally and accommodating the lower and upper edges of the VIPs. In this embodiment, each anchoring element 11 has a length substantially identical to the length of the horizontal edges of the VIPs 1. Any suitable anchoring elements can be used, for example, profiles such as those disclosed in WO-2014/142765-A1 and EP1213406-A2, discussed above. In some embodiments, the anchoring elements can have lengths different from the lengths of the edges of the VIPs, for example, anchoring can take place at specific points along the edge of the panel, points that are placed at a distance from each other.

The vertical edges of the adjacent VIPs 1 are spaced from each other by vertically extending gaps filled with mineral wool 2, attached to the wall by rosette type fasteners 21, as schematically illustrated in figure 1. The mineral wool 2 is arranged filling the gaps between the VIPs 1 and also the gaps between the anchoring elements 11, that is, the mineral wool extends continuously in the vertical direction, over a distance corresponding to several rows of VIPs.

Figure 2 is a schematic top view of a cross section of the system of figure 1, showing how the mineral wool 2 element features a T-shaped cross section, with a central part that is placed in the gap between the two adjacent VIPs 1 and that reaches the wall 3, and a transvers part that extends over part of the external surfaces of the VIPs 1 in correspondence with their vertical edges. This arrangement can be helpful to minimize the thermal bridge effect caused by the spacing between the VIPs 1.

Additionally, the system of this embodiment comprises external panels 4, as well as fastening elements 41 that attach the external panels 4 to the wall 3. In figure 2 it is schematically illustrated how humidity or vapor 5 that passes through the wall 3 can pass through the vapor permeable material 2 and enter the space 6 between the VIPs 1 and the external panels 4, a space 6 that constitutes an air cavity where vapor is removed by convection.

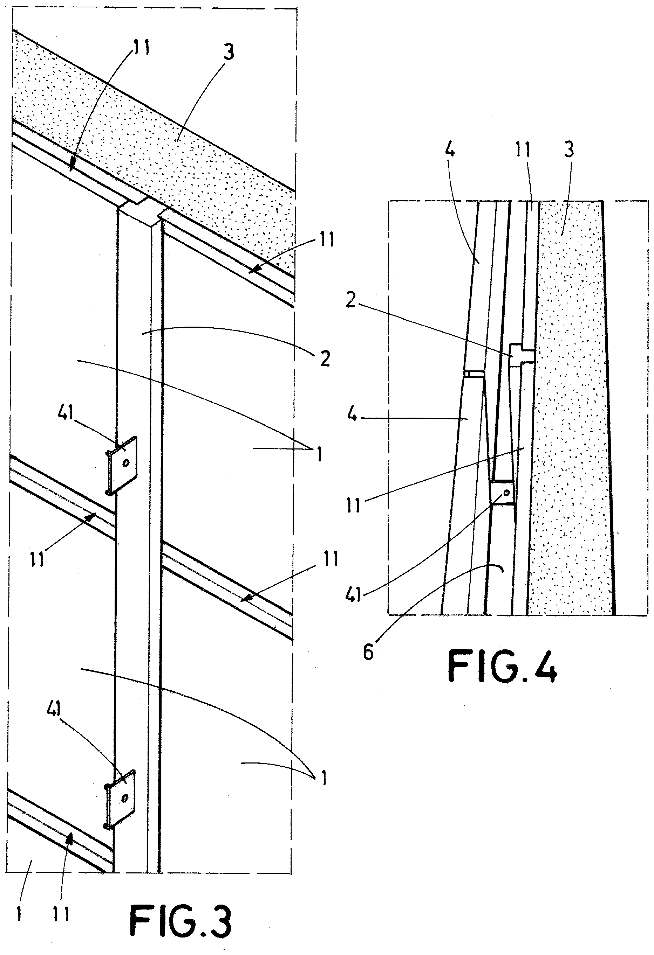

Figures 3 and 4 are schematic perspective view schematically illustrating how the T-shaped element of vapor permeable material 2 occupies the vertical gap between two adjacent VIPs 1, whereby the fastening elements 41 for the external panels 4 extend from the wall 3 through the gap, through the vapor permeable material 2. The space 6 between the VIPs 1 and the external panels 4 (for example, a space having a size of between 1 and 8 cm in the direction perpendicular to the wall) thus allows the façade to breathe, as explained above. Mineral wool, such as glass wool or maybe even more preferably stone wool, is considered especially useful to achieve sufficient vapor permeance while minimizing impairment of the thermal insulation provided by the vacuum insulation panels.

In this text, the term "comprises" and its derivations (such as "comprising", etc.) should not be understood in an excluding sense, that is, these terms should not be interpreted as excluding the possibility that what is described and defined may include further elements, steps, etc.

Unless otherwise specified, any indicated ranges include the recited end points.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A system comprising a plurality of vacuum insulation panels (1) attached to a wall (3) by anchoring elements (11), the vacuum insulation panels (1) being arranged in an array comprising a plurality of rows and columns of vacuum insulation panels (1),
**characterized in that**
the system includes a plurality of gaps, each gap separating one vacuum insulation panel from an adjacent vacuum insulation panel,
and **in that**
a vapor permeable material (2) is arranged in the gaps.

2. The system according to claim 1, wherein at least some of the gaps in which the vapor permeable material (2) is arranged extend vertically between adjacent vacuum insulation panels (1) arranged side by side.

3. The system according to claim 2, wherein all of the gaps in which the vapor permeable material (2) is arranged extend vertically between adjacent vacuum insulation panels (1) arranged side by side.

4. The system according to claim 2 or 3, wherein the anchoring elements (11) are arranged between horizontal rows of vacuum insulation panels (1).

5. The system according to claim 4, wherein the vacuum insulation panels (1) have horizontal edges having a length, and wherein the anchoring elements (11) have substantially the same length as the horizontal edges of the vacuum insulation panels (1), so that there is a gap between adjacent anchoring elements (11), the vapor permeable material (2) being present in the gap between the anchoring elements (11).

6. The system according to any one of the preceding claims, the system further comprising a plurality of external panels (4) positioned spaced from the vacuum insulation panels (1), wherein the vacuum insulation panels (1) are positioned between the external panels (4) and the wall (3), wherein the external panels (4) are attached to the wall (3) by fastening elements (41) that extend through at least some of the gaps in which the vapor permeable material (2) is arranged.

7. The system according to any one of the preceding claims, wherein the vapor permeable material has a T-shaped cross section.

8. The system according to any one of the preceding claims, wherein the vapor permeable material is attached to the wall by fasteners (21) including a disc-shaped member that abuts against the vapor permeable material.

9. The system according to any one of the preceding claims, wherein the vapor permeable material comprises mineral fibers.

10. The system according to claim 9, wherein the vapor permeable material comprises glass wool or stone wool.

11. A method of assembling a façade system, comprising:
- anchoring a plurality of vacuum insulation panels (1) to a wall (3), leaving at least some gaps between at least some adjacent vacuum insulation panels (1);
- placing a vapor permeable material (2) in the gaps;
- attaching a plurality of external panels (4) to the wall using fastening elements (41), so that the external panels (4) are spaced (6) from the vacuum insulation panels (1).

12. The method according to claim 11, wherein the step of anchoring the plurality of vacuum insulation panels (1) to a wall (3) comprises attaching anchoring elements (11) to the wall, so that the anchoring elements (11) extend in a horizontal direction, and placing the vacuum insulation panels in said anchoring elements such that the anchoring elements (11) retain the horizontal edges of the vacuum insulation panels (1).

13. The method according to claim 12, wherein the gaps are vertical.

14. The method according to any one of claims 11-13, wherein the fastening elements (41) extend from the wall (3) through the gap.

15. The method according to any one of claims 11-14, wherein the vapor permeable material (2) comprises mineral wool.
